# FASCICULE DE BREVET EUROPEEN

(11) **EP 2 764 941 B1**
(45) Date de publication et mention de la délivrance du brevet: **18.01.2017**
(21) Numéro de dépôt: 13000699.2
(22) Date de dépôt: 11.02.2013
(51) Int. Cl.: B23D 31/00, B02C 18/04, B23Q 11/00, B30B 9/32, F16P 1/00

(54) **Cisaille à ferraille.**
Schrottschere
Scrap cutter

(43) Date de publication de la demande: 13.08.2014
(73) Titulaire: Lefort, Christian, 1460 Ittre (BE)
(72) Inventeur: Lefort, Christian, 1460 Ittre (BE)
(74) Mandataire: Donné, Eddy

(56) Documents cités:
- EP-A2- 1 449 608
- DE-C1- 3 319 278

## Description

L'invention concerne une cisaille à ferraille destinée à couper des déchets de métal de grande envergure, telles que carcasses de voiture au similaires.

Une telle cisaille est documentée par le DE 3319278 C.

Les ferrailles sont généralement coupées en morceaux en vue de leur transport, par exemple au moyen de bandes transporteuses ou camion ou en vue de leur manipulations pour le stockage ou pour leur récupération dans un haut fourneau ou autre.

Une cisaille de ferraille comprend d'une manière générale un bac pour recevoir les ferrailles à couper avec une sortie latérale sous forme d'un portique verticale avec des lames coupantes pour sectionner les ferrailles qui sont dégagées du bac à travers la sortie au moyen d'un poussoir hydraulique.

La sortie est au moins partiellement couverte par une trappe de protection contre les éclats de ferrailles, la trappe étant suspendue de manière pivotante au portique de façon à pouvoir pivoter librement autour d'un axe horizontal à son bord supérieur.

Quand les ferrailles sont dégagées du bac, elles poussent contre la trappe qui s'ouvre partiellement tout en évitant que des éclats de ferrailles coupées puissent être projetées vers l'extérieur pour protéger les ouvriers qui se trouvent aux alentours.

La trappe de protection est généralement fabriquée sous forme d'une tôle en acier et peut facilement peser entre 100 en 200 kilos.

En cas de travaux de maintenance ou de réparations au niveau des lames coupantes de la cisaille ou au niveau de l'hydraulique pour faire fonctionner la cisaille, le mécanicien ouvre partiellement la trappe en levant le bord inférieur de la trappe et en callant la trappe dans une position inclinée pour avoir accès libre aux pièces à maintenir ou à réparer par en dessous la trappe, notamment par l'ouverture entre la trappe et le portique.

Il est évident que cette manière de travailler pose un certain risque d'accident grave quand la cale en bois glisse ou se casse, puisque le mécanicien se trouve alors coincé entre la trappe de protection et le portique. L'invention a pour but d'éviter les inconvénients susdits et de procurer une cisaille à ferraille qui permet d'effectuer des travaux de maintenance ou des réparations en toute sécurité.

Ce but est atteint selon l'invention par une cisaille à ferraille avec les caractéristiques de la revendication 1. Cette cisaille comprend un bac pour recevoir les ferrailles à couper, un poussoir pour dégager les ferrailles du bac à travers une sortie sous forme d'un portique que est muni de lames coupantes et d'une trappe de protection qui couvre au moins partiellement la sortie et qui, dans la configuration de fonctionnement normal de la cisaille, est suspendue au portique d'une manière librement pivotable autour d'au moins un axe de suspension démontable, dont la trappe de protection est muni d'un bras de maintenance principalement horizontal dont une première extrémité est pivotable vis-à-vis de la trappe de protection autour d'un pivot vertical et dont la deuxième extrémité, pour des besoin de maintenance, peut être rendue pivotable autour d'un axe vertical vis-à-vis du portique au moyen d'une rotule de maintenance qui est démontable ou dissociable et qui peut temporairement être mise en place afin de pouvoir faire pivoter l'ensemble du bras de maintenance et de la trappe de protection après avoir démonté l'axe ou les axes de suspension et qui, après la remise en place de la trappe de protection dans sa configuration de fonctionnement normal suite à l'achèvement des opérations de maintenance, peut de nouveau être démontée ou dissociée.

Un avantage d'une cisaille à ferraille équipée d'un bras de maintenance selon l'invention permet de dégager la sortie de la cisaille en toute sécurité afin de pouvoir effectuer des opérations de maintenance ou de réparations sans risque d'être coincé accidentellement entre la trappe de protection et le portique.

La trappe de protection peut être dégagée sans que le mécanicien doit lever la trappe de protection puisque la trappe de protection est suspendue à tout moment au bras de maintenance quand la trappe de protection est écartée de la sortie de la cisaille par rotation par rapport au portique.

Les opérations de sécurisation sont d'ailleurs très faciles et sans grand effort.

Ces opérations sont rendues encore plus faciles si la rotule est composée de deux parties de rotule et d'un axe de rotule pouvant relier les deux parties, dont une partie de rotule est fixée au bras de maintenance et dont l'autre partie de rotule est fixée au portique, et si les parties peuvent être alignées l'une par rapport à l'autre pour la mise en place fonctionnelle de l'axe de rotule par la simple rotation du bras de maintenance autour du pivot de la trappe de protection quand la trappe de protection se trouve dans son état de fonctionnement normal au repos.

Selon une réalisation préférentielle, la cisaille est pourvue de moyens de réglage de la hauteur de la trappe de protection, ce qui permet de facilement pouvoir ajuster la hauteur de la trappe pour remettre les axes de suspension en place pour le fonctionnement normal de la cisaille quand les réparations ont été effectuées.

Ces moyens sont faciles à réaliser quand le pivot est réalisé par deux oreilles horizontales fixées sur la trappe de protection et par une bague qui est fixée sur le bras de maintenance et qui est montée entre les deux oreilles au moyen d'un boulon traversant la bague et les oreilles. Dans ce cas, les moyens de réglage peuvent être formés par un simple écrou de réglage vissé sur le boulon entre la bague du pivot et l'oreille supérieure du pivot.

Pour plus de clarté, un exemple de réalisation d'une cisaille à ferraille selon l'invention est décrite ci-après à titre illustratif et non restrictif, référence étant faite aux dessins annexés dans lesquels:
La figure 1 est une vue latérale schématique d'une cisaille à ferraille selon l'invention au repos dans une situation de fonctionnement normal;
la figure 2 montre la cisaille de la figure 1 en état de fonctionnement;

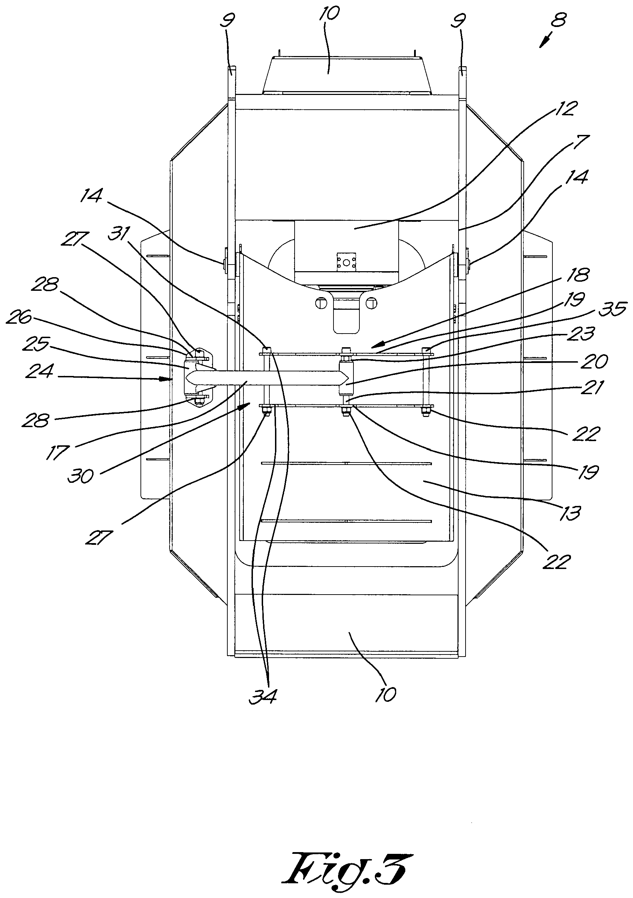

la figure 3 montre une vue de face en direction de la flèche F3 dans la figure 2 ;
la figure 4 est une vue en perspective de la partie indiquée par F4 dans la figure 1 ;
la figure 5 est une vue suivant la flèche F5 dans la figure 4;
les figures 6 à 9 montrent différentes situations successives pendant la préparation de la cisaille pour des travaux de maintenance ou de réparation;
la figure 10 est une vue suivant la flèche F10 dans la figure 9;
la figure 11 est une vue à plus grande échelle de la partie indiquée par F11 dans la figure 10.

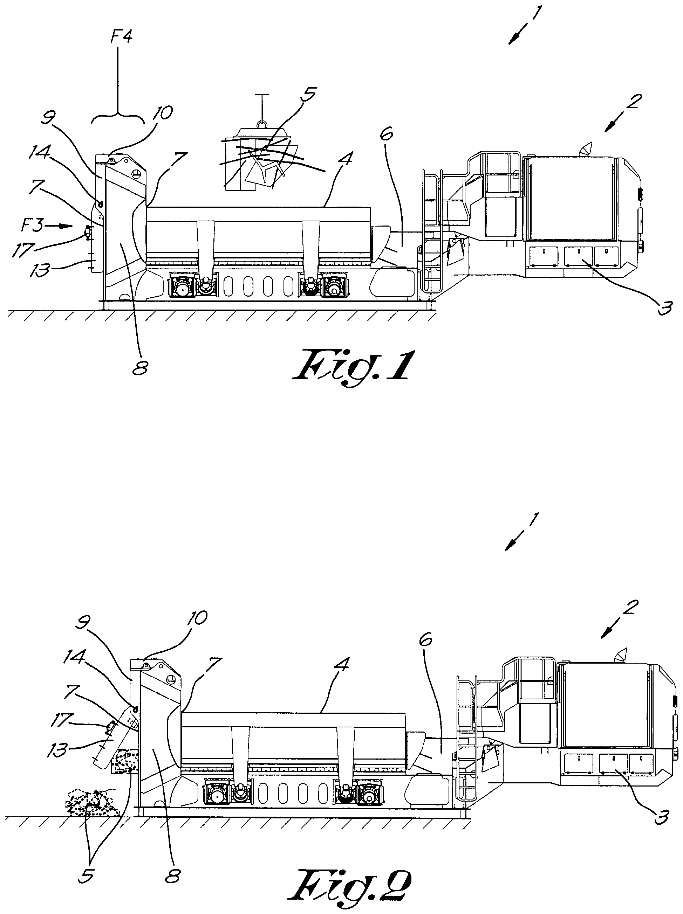

La cisaille à ferraille 1 représentée dans la figure 1 comprend une cabine de commande 2; un groupe hydraulique 3; un bac 4 pour recevoir les ferrailles à couper 5; un poussoir horizontal 6 pour dégager les ferrailles 5 du bac à travers une sortie 7 qui est formée par un portique 8 avec deux flancs latéraux 9 connectés par deux traverses 10.

Le portique 8 est muni de lames coupantes 11, dont par exemple une lame est fixe, tandis que l'autre lame est montée sur un coulisseau (non représenté) qui est actionné vers le bas au moyen d'un vérin hydraulique 12 pour couper la ferraille 5 qui se trouve entre les deux lames 11.

En coupant la ferraille 5 il se peut que des éclats de ferrailles soient projetés vers l'extérieur.

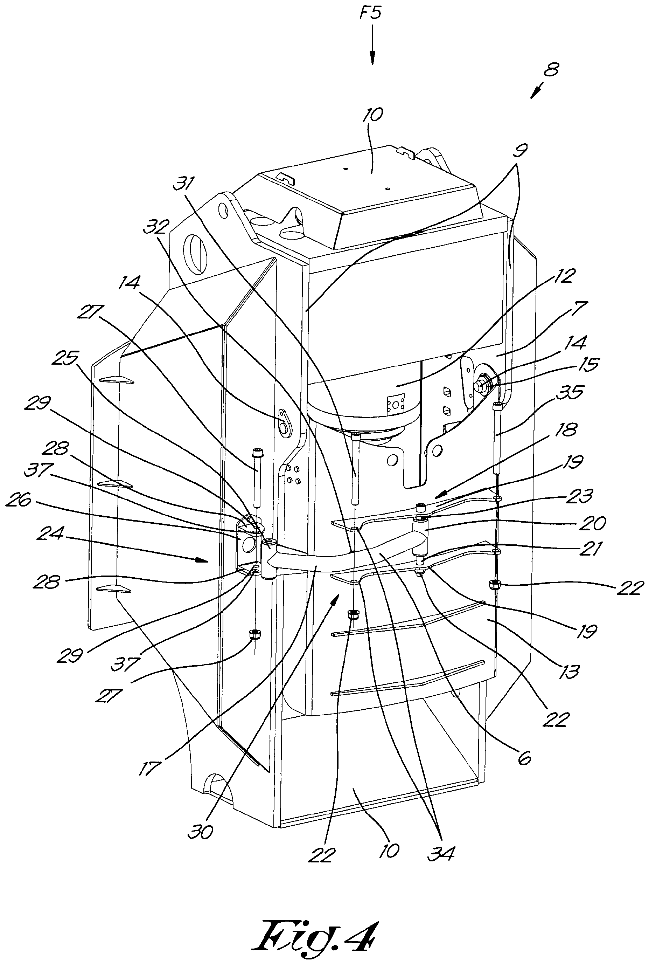

Afin de retenir ces éclats, la sortie 7 est munie d'une trappe de protection 13 qui, au repos, couvre au moins partiellement la sortie 7 comme illustrée dans les figures 1 et 4 et qui, dans la configuration de fonctionnement normal de la cisaille, est suspendue au portique 8 au moyen de deux axes de suspension 14 horizontaux traversant les flancs 9 du portique 8 et montés dans deux paliers 15 solidaires de la trappe de protection 13.

La trappe de protection 13 est libre de basculer vers l'avant autour des axes de suspension 14 et est maintenue en position quasi verticale par son poids ou par des butées d'amortissement 16.

Pendant le fonctionnement de la cisaille 1, la ferraille 5 découpée est poussée vers l'avant et sort de la cisaille 1 par la sortie 7, tout en repoussant la trappe de protection 13 comme montrée dans la figure 2.

Pour des raisons d'accessibilité des lames 11, du coulisseau et du vérin hydraulique 12 dans la sortie 7, par exemple pour des raisons de maintenance, la cisaille 1 est pourvue d'un système de bras de maintenance 17 selon l'invention qui peut être mis en place temporairement pour dégager la trappe de protection 13 de la sortie 7, le temps nécessaire pour effectuer les opérations de maintenance.

Le bras de maintenance 17 est principalement horizontal et peut pivoter vis-à-vis de la trappe de protection 13 au moyen d'un pivot 18 monté plus au moins au centre de la face extérieure de la trappe de protection 13, c'est-à dire plus ou moins au milieu de la largeur de la trappe 13 et approximativement au milieu de la hauteur de la trappe 13.

Le pivot 18 est réalisé par deux oreilles 19 horizontales et par une bague 20 que est fixée à une extrémité du bras de maintenance 17 et qui est montée entre les deux oreilles 19 au moyen d'un boulon vertical 21 traversant la bague 20 et les oreilles 19 et étant immobilisé en direction axiale par un écrou 22.

Le boulon 21 est pourvu d'un écrou de réglage 23 qui est logé entre l'oreille supérieure 19 et la bague 20 du pivot 18.

L'autre extrémité du bras de maintenance 17 peut être rendue pivotable autour d'un axe vertical vis-à-vis du portique 8 au moyen d'une rotule de maintenance 24 qui est composée de deux parties de rotule 25 et 26 et d'un axe de rotule 27 pouvant relier les deux parties 25 et 26.

Une partie de la rotule 25 est formée par une bague 25 qui est fixée au bras de maintenance 17, tandis que l'autre partie 26 est réalisée sous forme d'une chape 26 qui est montée sur le portique 8 à peu près à la même hauteur que le pivot 18 sur la trappe de protection 13 dans son état de repos suspendu.

La chape 26 comprend deux oreilles 28 et des passages 29 pour l'axe de la rotule 27, les passages 29 étant alignés verticalement l'un au dessus de l'autre.

Dans la configuration d'opération normale de la cisaille 1, la rotule de maintenance 24 est dissociée, c'est-à-dire que, les parties 25 et 26 de la rotule 24 sont écartées l'une de l'autre, comme illustré dans la figure 4, et que ces parties 25 et 26 ne sont pas reliées par l'axe de la rotule 27 qui est par exemple rangé dans les passages 29 de la chape 26.

Le bras de maintenance 17 est dimensionné de telle manière que les parties 25 et 26 de la rotule 24 peuvent être alignées mutuellement pour la mise en place fonctionnelle de l'axe de rotule 27 par la simple rotation du bras de maintenance 17 autour du pivot 18 sur la trappe de protection 13 quand celle-ci se trouve au repos dans la configuration de fonctionnement normal de la cisaille montrée dans la figure 1.

Pour cela il faut que l'axe de la rotule 27 rangé dans la chape 26 se situe à la même distance horizontale du boulon 21 du pivot 18 sur la trappe de protection 13 que l'axe de symétrie de la bague 25 fixée au bras de maintenance 17.

Pendant l'opération normale de la cisaille 1, la bague de rotule 25 au bout du bras de maintenance 17 est maintenue écartée de la chape 26 par le calage rotationnel du bras de maintenance 17 autour de son pivot 18 sur la trappe de protection 13.

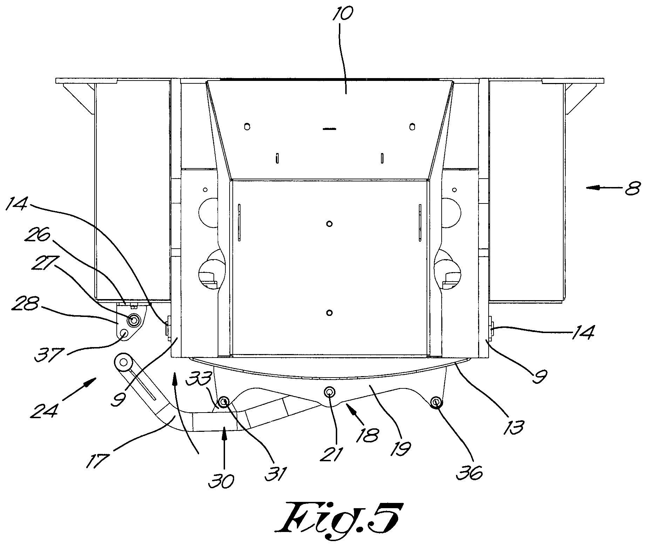

Les moyens de calage 30 permettant de tenir les parties de rotule 25 et 26 séparées sont obtenus dans l'exemple des figures par un boulon de calage 31 traversant un passage 32 dans un oeillet latéral 33 du bras de maintenance 17 et traversant des passages verticaux 34 dans les oreilles 19 du pivot 18 qui, à cette fin, sont rallongées de part et d'autre du pivot 18 comme illustré dans la figure 5, les passages 34 étant situés à une même distance horizontale du pivot 18.

Dans l'exemple montré, la trappe de protection 13 est pourvue de passages 34 de part et d'autre du pivot 18 du bras de maintenance 17 et à la même distance horizontale dudit pivot 18 afin de pouvoir caler le bras de maintenance 17 dans deux positions différentes, notamment une position de chaque côté du pivot 17.

La mise en place du système du bras de maintenance 17 pour effectuer des travaux de maintenance est facile et est illustrée par les figures.

Partant de la configuration de fonctionnement normal de la cisaille de la figure 1, l'axe 27 de la rotule 24 et le boulon de calage 31 sont enlevés comme illustré dans la figure 4.

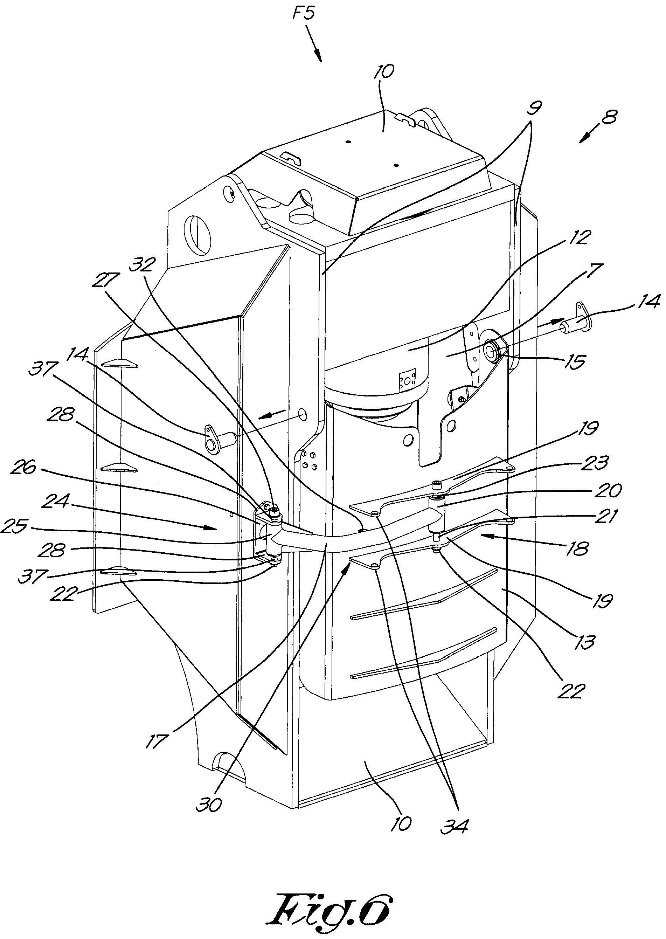

Le bras de maintenance 17 est ensuite basculé autour du pivot 18 comme montré par la flèche dans la figure 5, pour aligner les deux parties 25 et 26 de la rotule 24 de façon à pouvoir relier les deux parties 25 et 26 par insertion de l'axe 24 de la rotule 24 comme dans la figure 6.

Les axes de suspension 14 de la trappe de protection 13 sont ensuite enlevés comme illustré par les flèches dans la figure 6. La trappe de protection 13 n'est maintenant plus suspendue au portique 8 mais elle est supportée par le bras de maintenance 17.

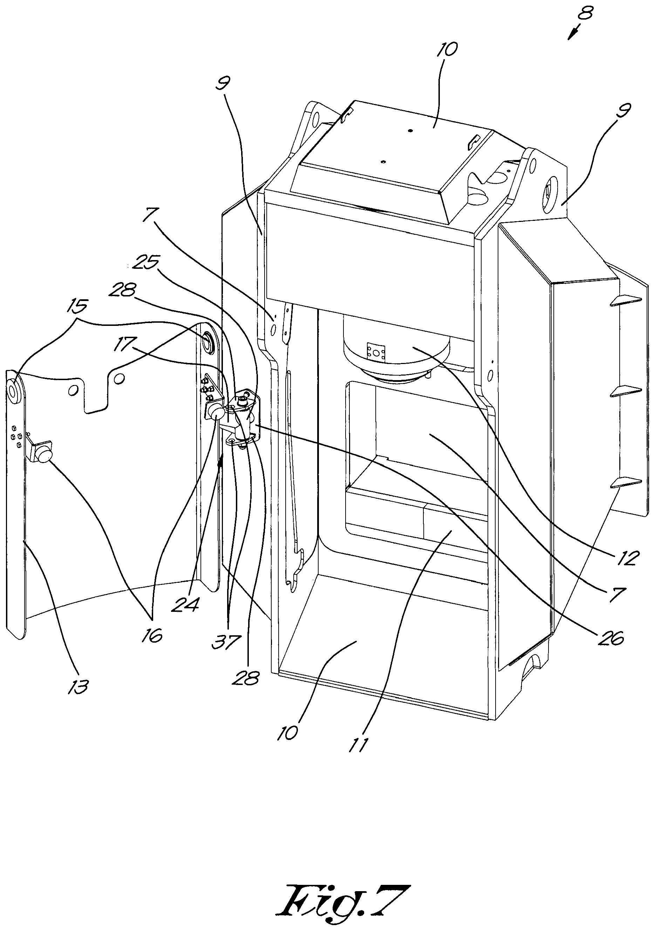

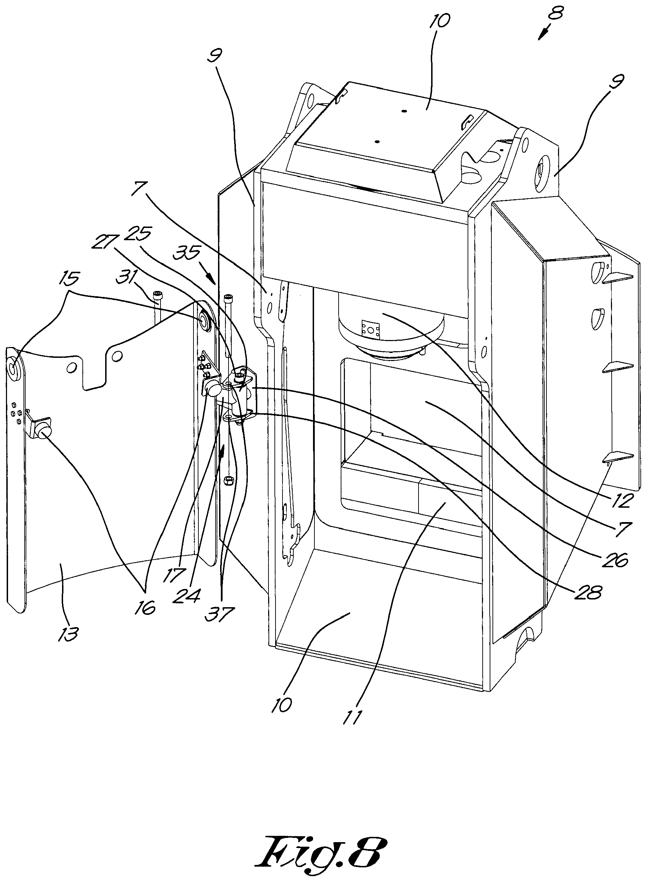

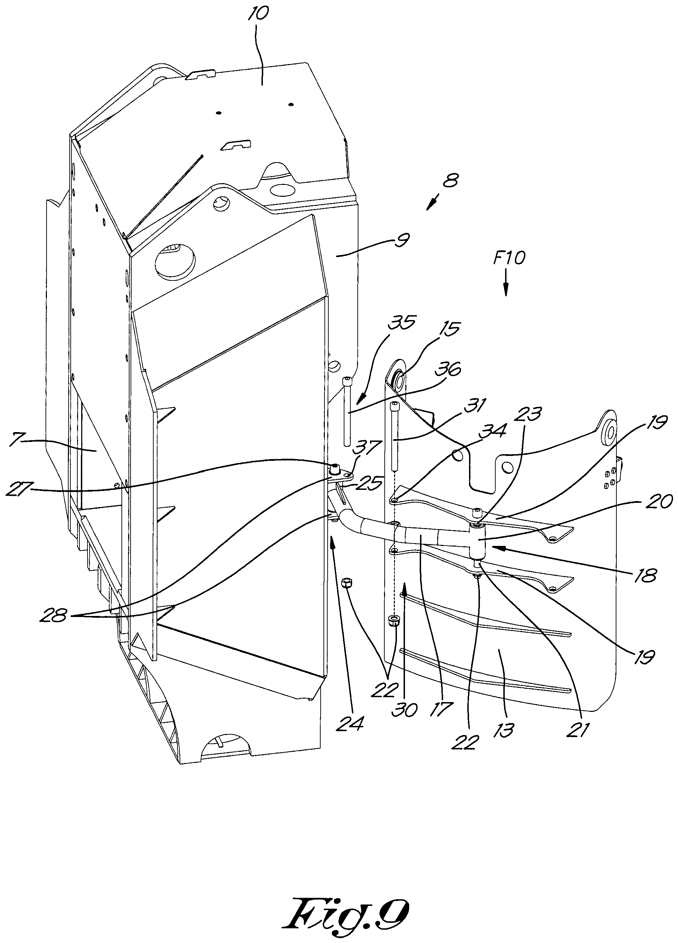

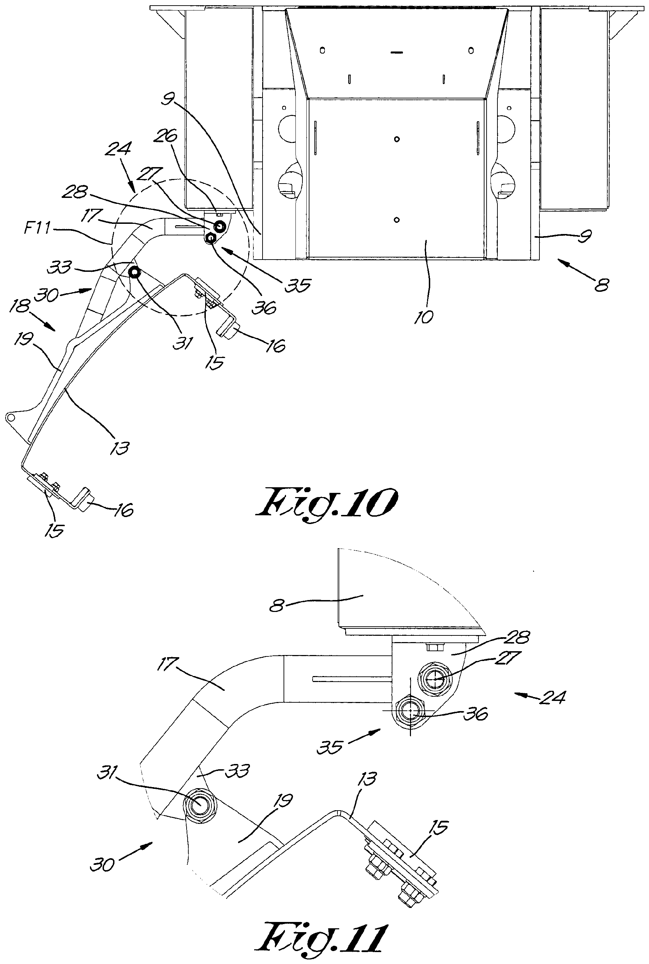

L'ensemble du bras de maintenance 17 et de la trappe de protection 13 peut maintenant être pivoté latéralement autour de l'axe 27 de la rotule 24 jusque dans une position de sécurité suffisamment éloignées de la sortie 7 pour permettre à un mécanicien d'accéder librement et en toute sécurité à la mécanique de la cisaille 1 montée dans le portique 8 comme par exemple montré dans les figures 7 à 10.

Optionnellement il est possible de prévoir des moyens de calage 35 supplémentaires permettant de caler le bras de maintenance 17 par rapport au portique 8 dans la position de sécurité susdite.

Ces moyens 35 sont obtenus par exemple par un boulon de calage 36 passant à travers des passages 37 dans les oreilles 28 de la chape 26 et à une distance de l'axe de rotule 27 en position montée.

Le boulon de calage 31 du bras de maintenance 17 vis-à-vis de la trappe 13 peut encore être remis en place pour bloquer la rotation de la trappe 13.

Les deux boulons de calage 31 et 36 peuvent être les mêmes pour être interchangeables mutuellement.

Il n'est pas exclu cependant de ne prévoir qu'un seul boulon de calage pouvant servir soit pour le calage du bras de maintenance 17 par rapport à la trappe de protection 13, soit pour le calage du bras de maintenance 17 par rapport au portique 8.

A la fin des opérations de maintenance, il est facile de remettre la trappe de protection 13 dans sa configuration de fonctionnement normal représente dans la figure 1.

Il suffit à ce moment de retirer le boulon ou les boulons de calage 31-36, de faire tourner la trappe 13 jusqu'en face de la sortie 7 pour aligner les paliers 15 de la trappe 13 sur les passages dans les flancs 9 du portique afin de pouvoir remettre les axes de suspension 14.

En cas d'un désalignement vertical, il est possible de régler la hauteur de trappe de protection 13 en tournant la vis de réglage 23.

Il est clair que le mécanicien n'a pas besoin de moyens de manutention quelconques.

Une fois que la trappe de protection 13 est suspendue dans sa position d'utilisation normale, la rotule de maintenance 24 peut être dissociée de nouveau en retirant l'axe de rotule 24. Le bras de maintenance 17 peut ensuite être recalé dans sa position initiale en remettant le boulon de calage 31 pour maintenir la bague 25 de la rotule 24 à une distance de la chape 26 de la rotule 24.

Il est bien sûr possible d'enlever le bras de maintenance 17 et de le ranger pour une prochaine occasion.

Il est clair que la rotule 24 ne doit pas nécessairement être dissociable, mais que par exemple la rotule 24 complète reste toujours fixée dans son état assemblée au bout du bras de maintenance 17 et que la rotule 24, en cas de besoin, est fixée contre le portique 8, par exemple avec une chape de montage prévue à cette fin à la rotule 24.

Il est évident que l'invention n'est nullement limitée aux exemples décrits ci-avant mais que de nombreuses modifications peuvent être apportées à la cisaille de ferraille décrits ci-avant sans sortir du cadre de l'invention telle que définie dans les revendications suivantes.

## Revendications

1. Cisaille à ferraille qui comprend un bac (4) pour recevoir les ferrailles (5) à couper, un poussoir (6) pour dégager les ferrailles (5) du bac à travers une sortie (7) sous forme d'un portique (8) que est muni de lames coupantes (11) et d'une trappe de protection (13) qui couvre au moins partiellement la sortie (7) et qui, dans la configuration de fonctionnement normal de la cisaille à ferraille (1), est suspendue au portique (8) d'une manière librement pivotable autour d'au moins un axe de suspension (14) démontable, **caractérisée en ce que** la trappe de protection (13) est muni d'un bras de maintenance (17) principalement horizontal dont une première extrémité est pivotable vis-à-vis de la trappe de protection (13) autour d'un pivot (18) vertical et dont la deuxième extrémité, pour des besoins de maintenance, peut être rendue pivotable autour d'un axe vertical (27) vis-à-vis du portique (8) au moyen d'une rotule de maintenance (24) qui est démontable ou dissociable et qui peut temporairement être mise en place afin de pouvoir faire pivoter l'ensemble du bras de maintenance (17) et de la trappe de protection (13) après avoir démonté l'axe ou les axes de suspension (14) et qui, après la remise en place de la trappe de protection (13) dans sa configuration de fonctionnement normal, peut de nouveau être démontée ou dissociée.

2. Cisaille à ferraille selon la revendication 1, **caractérisée en ce que** la rotule (24) est composée de deux parties de rotule (25 et 26) et d'un axe de rotule (27) pouvant relier les deux parties (25 et 26), dont une partie de rotule (25) est fixée au bras de maintenance (17) et dont l'autre partie de rotule (26) est fixée au portique (8), et que les parties (25 et 26) peuvent être alignées l'un par rapport à l'autre pour la mise en place fonctionnel de l'axe de rotule (27) par simple rotation du bras de maintenance (17) autour du pivot (18) de la trappe de protection (13) quand celle-ci se trouve au repos dans sa configuration de fonctionnement normal.

3. Cisaille à ferraille selon la revendication 2, **caractérisée en ce que** la partie de la rotule (25) sur le bras de maintenance (17) est une bague (25), tandis que la partie de la rotule (26) sur le portique (8) comprend une chape (26) avec deux oreilles (28) et que, dans l'état assemblé de la rotule (24), la bague (25) est insérée entre les oreilles (28) et est traversée par l'axe de rotule (27) qui passe en même temps à travers un passage (29) dans les oreilles (28).

4. Cisaille à ferraille selon la revendication 2 ou 3, **caractérisée en ce que** la cisaille à ferraille (1) est pourvue de moyens de calage (30) permettant de caler le bras de maintenance (17) vis-à-vis de la trappe de protection (13) dans une position de rotation autour du pivot (18) dans laquelle les deux parties (25 et 26) de la rotule (24) sont séparées l'une de l'autre quand la trappe de protection (17) se trouve au repos dans la configuration de fonctionnement normal.

5. Cisaille à ferraille selon la revendication 4, **caractérisée en ce que** les moyens de calage (30) du bras de maintenance (17) vis-à-vis de la trappe de protection (13) sont obtenus par un boulon de calage (31) traversant un passage (32) dans le bras de maintenance et un passage vertical (34) dans la trappe de protection (13), les passages (32 et 34) étant situés à une même distance horizontale du pivot (18) sur la trappe de protection (13).

6. Cisaille à ferraille selon la revendication 5, **caractérisée en ce que** les passages (32 et 34) sont réalisés dans un oeillet latéral du bras de maintenance (17) et dans une oreille (19) montée sur la face extérieure de la trappe de protection (13).

7. Cisaille à ferraille selon la revendication 5 ou 6, **caractérisée en ce que** la trappe de protection (13) est pourvue de passages (34) de part et d'autre du pivot (18) du bras de maintenance (17) et à la même distance dudit pivot (18) afin de pouvoir caler le bras de maintenance (17) dans deux positions différentes, notamment une position de chaque côté du pivot (18).

8. Cisaille à ferraille selon l'une quelconque des revendications précédentes, **caractérisée en ce qu'**elle est pourvue de moyens de calage (35) permettant de caler le bras de maintenance (17) par rapport au portique (8) dans une position de rotation autour de la rotule (24) dans laquelle la trappe de protection (13) est dégagée de la sortie (7) de la cisaille à ferraille (1).

9. Cisaille à ferraille selon la revendication 8, **caractérisée en ce que** les moyens de calage (35) du bras de maintenance (17) vis-à-vis du portique (8) sont obtenus par un boulon de calage (36) et par un passage (37) dans l'oreille ou les oreilles (28) de la chape (26) et à une distance de l'axe de rotule (27) en position montée.

10. Cisaille à ferraille selon les revendications 5 et 9, **caractérisée en ce que** les boulons de calage (31 et 36) sont les mêmes ou qu'il n'y a qu'un seul boulon de calage (31/36) pouvant servir soit pour le calage du bras de maintenance (17) par rapport à la trappe de protection (13), soit pour le calage du bras de maintenance (17) par rapport au portique (8).

11. Cisaille à ferraille selon l'une quelconque des revendications précédentes, **caractérisée en ce que** le pivot (18) du bras de maintenance (17) est situé plus ou moins au milieu de la largeur de la trappe de protection (13).

12. Cisaille à ferraille selon l'une quelconque des revendications précédentes, **caractérisée en ce que** le pivot (18) du bras de maintenance (17) est situé plus ou moins au milieu de la hauteur de la trappe de protection (13).

13. Cisaille à ferraille selon l'une quelconque des revendications précédentes, **caractérisée en ce que** la rotule (24) sur le portique se situe principalement à la même hauteur que le pivot (18) sur la trappe de protection (13).

14. Cisaille à ferraille selon l'une quelconque des revendications précédentes, **caractérisée en ce que** la cisaille à ferraille (1) est pourvue de moyens de réglage de la hauteur de la trappe de protection (13).

15. Cisaille à ferraille selon la revendication 14, **caractérisée en ce que** le pivot (18) est réalisé par deux oreilles (19) horizontales fixées sur la trappe de protection (13) et par une bague (20) fixée sur le bras de maintenance (17) et montée entre les deux oreilles (19) au moyen d'un boulon (21) traversant la bague (20) et les oreilles (19) et que les moyens de réglage de la hauteur de la trappe de protection (13) sont formés par un écrou de réglage (23) vissé sur le boulon (21) et situé entre la bague (20) du pivot (18) et l'oreille supérieure (19) du pivot (18).

## Patentansprüche

1. Schrottschere mit Behälter (4) zur Aufnahme des Schrotts (5) der geschnitten werden soll, einen Stößel, (6) zur Ausgabe des Schrotts (5) aus dem Behälter mittels eines Ausgangs (7) in Form eines Rahmens, (8) der mit Schneideklingen (11) und einer klappbaren Abdeckung (13) versehen ist, welche mindestens einen Teil des Ausgangs (7) abdeckt und welche in der Konfiguration für normalen Betrieb der Schrottschere (1) im Rahmen (8) aufgehängt ist, so dass diese frei drehbar um mindestens eine entfernbare Aufhängeachse (14) ist, **dadurch gekennzeichnet, dass** die klappbare Abdeckung (13) mit einem hauptsächlich horizontalen Wartungsarm (17) versehen ist, bei welchem ein erstes Ende zum Gegenüber der klappbaren Abdeckung (13) um einen vertikalen Drehpunkt (18) herum drehbar ist und bei welchem das zweite Ende zu Wartungszwecken um die vertikale Achse (27) zum Gegenüber des Rahmens (8) drehbar gemacht werden kann mittels einem Wartungskugelgelenk (24), das abnehmbar oder lösbar ist und das vorübergehend eingesetzt werden kann, um den gesamten Wartungsarm (17) und die klappbare Abdeckung (13) nach Demontage der Aufhängeachse oder der Aufhängeachsen (14) drehbar zu machen und das nach Wiedereinsetzen der klappbaren Abdeckung (13) in dessen Konfiguration für den normalen Betrieb erneut abgenommen oder gelöst werden kann.

2. Schrottschere gemäß des Anspruchs 1, **dadurch gekennzeichnet, dass** das Kugelgelenk (24) aus zwei Kugelgelenkteilen (25 und 26) besteht und die Kugeldrehachse (27) die zwei Teile (25 und 26) miteinander verknüpfen kann, wobei ein Teil des Kugelgelenks (25) am Wartungsarm (17) befestigt ist und der andere Teil des Kugelgelenks (26) am Rahmen (8) befestigt ist und die Teile (25 und 26) können aufeinander mittels dem Einsatz der Kugeldrehachse (27) ausgerichtet werden durch einfache Drehung des Wartungsarms (17) um den Drehpunkt (18) der klappbaren Abdeckung (13), wenn sich diese im Ruhezustand bei ihrer Konfiguration für normalen Betrieb befindet.

3. Schrottschere gemäß dem Anspruch 2, **dadurch gekennzeichnet, dass** der Teil des Kugelgelenks (25) auf dem Wartungsarm (17) ein Ring (25) ist, wohingegen der Teil des Kugelgelenks (26) auf dem Rahmen (8) aus einem Gabelstück (26) mit zwei Löchern (28) besteht und dass im montierten Zustand des Kugelgelenks (24) der Ring (25) in die Ösen(28) eingeführt wird und durch die Kugelgelenkachse (27) durchgeführt wird, die gleichzeitig durch einen Durchlass (29) in die Ösen 28) geht.

4. Schrottschere gemäß des Anspruchs 2 oder 3, **dadurch gekennzeichnet, dass** die Schrottschere (1) mit einem Blockiersystem (30) versehen ist, welche erlaubt, den Wartungsarm (17) gegenüber der klappbaren Abdeckung (13) in einer Drehposition um den Drehpunkt (18) festzustellen, an welchem die zwei Teile (25 und 26) des Kugelgelenks (24) voneinander getrennt sind, wenn die klappbare Abdeckung (17) sich im Ruhezustand in deren Konfiguration für den normalen Betrieb befindet.

5. Schrottschere gemäß dem Anspruch 4, **dadurch gekennzeichnet, dass** das Blockiersystem (30) des Wartungsarms (17) gegenüber der klappbaren Abdeckung (13) mittels einem Blockierbolzen (31) erzielt wird, welcher durch einen Durchlass (32) durch den Wartungsarm läuft und mittels einem vertikalen Durchlass (34) in der klappbaren Abdeckung (13), die Durchlässe (32 und 34) befinden sich auf gleichem horizontalen Abstand zum Drehpunkt (18) auf der klappbaren Abdeckung (13).

6. Schrottschere gemäß dem Anspruch 5, **dadurch gekennzeichnet, dass** die Durchlässe (32 und 32) durch eine seitliche Öse des Wartungsarms (17) und durch eine Öse (19) geführt werden, die auf der Außenseite der klappbaren Abdeckung (13) montiert ist.

7. Schrottschere gemäß den Ansprüchen 5 oder 6, **dadurch gekennzeichnet, dass** die klappbare Abdeckung (13) mit beidseitigen Durchlässen (34) auf dem Drehpunkt (18) des Wartungsarms (17) versehen ist und auf gleichem Abstand besagtem Drehpunkts (18) ist, um den Wartungsarms (17) in zwei verschiedenen Positionen blockieren zu können, insbesondere in einer Position auf jeder Seite des Drehpunkts (18).

8. Schrottschere gemäß eines beliebigen der vorherigen Ansprüche, **dadurch gekennzeichnet, dass** dieser mit einem Blockiersystem (35) versehen ist, welche erlaubt den Wartungsarm (17) gegenüber dem Rahmen (8) in einer Drehposition um das Kugelgelenk (24) herum zu blockieren, in welchem die klappbare Abdeckung (13) vom Auslass (7) der Schrottschere (1) losgelöst ist.

9. Schrottschere gemäß dem Anspruch 8, **dadurch gekennzeichnet, dass** das Blockiersystem (35) des Wartungsarms (17) gegenüber dem Rahmen (8) durch einen Blockierbolzen (36) und durch den Durchlass (37) in der Öse oder den Ösen (28) des Gabelstücks (26) erzielt wird und auf Abstand der Drehachse (27) in montierter Position.

10. Schrottschere gemäß den Ansprüchen 5 und 9, **dadurch gekennzeichnet, dass** die Blockierbolzen (31 und 36) die gleichen sind oder dass es nur einen Blockierbolzen (31/36) gibt, der entweder zur Blockierung des Wartungsarms (17) gegenüber der klappbaren Abdeckung (13) oder zur Blockierung des Wartungsarms (17) gegenüber des Rahmens (8) genutzt werden kann.

11. Schrottschere gemäß einem beliebigen der vorherigen Ansprüche, **dadurch gekennzeichnet, dass** der Drehpunkt (18) des Wartungsarms (17) sich mehr oder weniger in der Mitte der breiten Seite der klappbaren Abdeckung (13) befindet.

12. Schrottschere gemäß einem beliebigen der vorherigen Ansprüche, **dadurch gekennzeichnet, dass** der Drehpunkt (18) des Wartungsarms (17) sich mehr oder weniger in der Mitte der hohen Seite der klappbaren Abdeckung (13) befindet.

13. Schrottschere gemäß einem beliebigen der vorherigen Ansprüche, **dadurch gekennzeichnet, dass** das Kugelgelenk (24) auf dem Rahmen sich hauptsächlich auf gleicher Höhe befindet wie der Drehpunkt (18) auf der klappbaren Abdeckung (13).

14. Schrottschere gemäß einem beliebigen der vorherigen Ansprüche, **dadurch gekennzeichnet, dass** die Schrottschere (1) mit einem System zur Einstellung der Höhe der klappbaren Abdeckung (13) versehen ist.

15. Schrottschere gemäß dem Anspruch 14, **dadurch gekennzeichnet, dass** der Drehpunkt (18) durch zwei horizontale Ösen (19) zustande kommt, die auf der klappbaren Abdeckung (13) befestigt sind und durch einen Ring (20), der auf dem Wartungsarm (17) befestigt ist und zwischen den zwei Ösen (19) mittels eines Rings (21) montiert sind, der den Bolzen (20) und die Ösen (19) durchläuft und dass das System zur Einstellung der Höhe der klappbaren Abdeckung (13) durch eine Stellmutter (23) erzeugt wird, welche mit dem Bolzen (21) verschraubt ist und sich zwischen dem Ring (20) des Drehpunkts (18) und der oberen Öse (19) des Drehpunkts (18) befindet.

## Claims

1. Shear for scrap metal that comprises a receptacle (4) for receiving the scrap metal (5) to be cut, a pusher (6) for removing the scrap metal (5) from the receptacle through an outlet (7) in the form of a gantry (8) that is provided with cutting blades (11) and a protective flap (13) which at least partially covers the outlet (7) and which, in the normal operating configuration of the scrap shear (1), is suspended on the gantry (8)such that it is freely pivotable about at least one removable suspension pin (14), **characterised in that** the protective hatch (13) is provided with a predominantly horizontal service arm (17) the first end of which is pivotable relative to the protective flap(13) around a vertical pivot (18) and the second end of which can be rendered pivotable, for maintenance purposes, about a vertical pin (27) relative to the gantry (8) by means of a service ball joint (24) which is removable or separable and can be temporarily put in place in order to be able to pivot the assembly comprising the service arm (17) and the protective flap (13) after having removed the suspension pin or pins (14) and which, after the protective flap (13) has been replaced in position in its normal operating configuration, can again be removed or separated.

2. Scrap shear according to claim 1, **characterised in that** the ball joint (24) comprises two ball joint sections (25 and 26) and one ball pin (27) which connects the two sections (25 and 26), one ball joint section (25) being fixed to the service arm (17) and the other ball joint section (26) being fixed to the gantry (8), and that the sections (25 and 26) can be aligned with one another for the functional deployment of the ball pin (27) by simple rotation of the service arm (17) around the pivot (18) of the protective flap (13) when the latter is at rest in its normal operating configuration.

3. Scrap shear according to claim 2, **characterised in that** the ball joint section (25) on the service arm (17) is a ring (25) while the ball joint section (26) on the gantry (8) comprises a clevis (26) with two lugs (28) and which, in the assembled state of the ball joint (24), the ring (25) is inserted between the lugs (28) and is traversed by the ball pin (27) which simultaneously passes through an opening (29) in the lugs (28).

4. Scrap shear according to claim 2 or 3, **characterised in that** the scrap shear (1) is provided with a clamping means (30) for clamping the service arm (17) to the protective flap (13) in a position of rotation about the pivot (18) wherein the two sections (25 and 26) of the ball joint (24) are separated from each other when the protective flap (17) is a rest in the normal operating configuration.

5. Scrap shear according to claim 4, **characterised in that** the clamping means (30) of the service arm (17) to the protective flap (13) are achieved by a clamping bolt (31) passing through an opening (32) in the service arm and a vertical opening (34) in the protective flap (13), the openings (32 and 34) being located equidistant horizontally from the pivot (18) on the protective flap (13).

6. Scrap shear according to claim 5, **characterised in that** the openings (32 and 34) are realised in a lateral eye of the service arm (17) and in a lug (19) mounted on the outer face of the protective flap (13).

7. Scrap shear according to claim 5 or 6, **characterised in that** the protective flap (13) is provided with openings (34) on either side of the pivot (18) of the service arm (17) and equidistant from said pivot (18) such that the service arm (17) can be clamped in two different positions, in particular a position on each side of the pivot (18).

8. Scrap shear according to any one of the preceding claims, **characterised in that** it is provided with a clamping means (35) allowing the service arm (17) to be clamped relative to the gantry (8) in a position of rotation around the ball joint (24) wherein the protective flap (13) is disengaged from the outlet (7) of the scrap shear (1).

9. Scrap shear according to claim 8, **characterised in that** the clamping means (35) of the service arm (17) to the gantry (8) are achieved by means of a clamping bolt (36) and an opening (37) in the lug or lugs (28) of the clevis (26) and at a distance from the ball pin (27) in the mounted position.

10. Scrap shear according to claims 5 and 9, **characterised in that** the clamping bolts (31 and 36) are the same, or **in that** there is only one clamping bolt (31/36) that can be used either to clamp the service arm (17) relative to the protective flap (13), or to clamp the service arm (17) relative to the gantry (8).

11. Scrap shear according to any one of the preceding claims, **characterised in that** the pivot (18) of the service arm (17) is located approximately at the midpoint of the width of the protective flap (13).

12. Scrap shear according to any one of the preceding claims, **characterised in that** the pivot (18) of the service arm (17) is located approximately at the midpoint of the height of the protective flap (13).

13. Scrap shear according to any one of the preceding claims, **characterised in that** the ball joint (24) on the gantry is located predominantly at the same height as the pivot (18) on the protective flap (13).

14. Scrap shear according to any one of the preceding claims, **characterised in that** the scrap shear (1) is provided with means for adjusting the height of the protective flap (13).

15. Scrap shear according to claim 14, **characterised in that** the pivot (18) is realised by two horizontal lugs (19) fixed to the protective flap (13) and by a ring (20) fixed to the service arm (17) and mounted between the two lugs (19) by means of a bolt (21) passing through the ring (20) and the lugs (19) and that the means for adjusting the height of the protective flap (13) are formed by an adjusting nut (23) screwed to the bolt (21) and located between the ring (20) of the pivot (18) and the upper lug (19) of the pivot (18).
